(19) Europäisches Patentamt

European Patent Office

Office européen des brevets

(11) Veröffentlichungsnummer: **0 243 908**
**A2**

## (12) EUROPÄISCHE PATENTANMELDUNG

(21) Anmeldenummer: 87106039.8

(22) Anmeldetag: 24.04.87

(51) Int. Cl.⁴: **C02F 5/00** , C11D 3/12

(30) Priorität: 02.05.86 DE 3614779

(43) Veröffentlichungstag der Anmeldung:
04.11.87 Patentblatt 87/45

(84) Benannte Vertragsstaaten:
**AT BE CH DE ES FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Jacobs, Jochen, Dr.**
**Am Acker 20**
**D-5600 Wuppertal(DE)**
Erfinder: **Krings, Peter, Dr.**
**Wedelstrasse 72**
**D 4150 Krefeld(DE)**
Erfinder: **Schwadtke, Karl**
**Taubenweg 25**
**D-5090 Leverkusen 3(DE)**
Erfinder: **Smulders, Eduard, Dr.**
**Menzelweg 15**
**D-4010 Hilden(DE)**

(54) Granulares, phosphatfreies Wasserenthärtungsmittel.

(57) Als phosphatfreies Enthärtungsmittel eignet sich ein Granulat, das aus (a) 50 bis 60 Gew.-% feinkristallinem Zeolith, (b) 3 bis 5 Gew.-% Natriumsalz eines Polyacrylsäure-, Polymethacrylsäure-oder eines Acrylsäure-Maleinsäure-Copolymeren, 4 bis 15 Gew.-% Natriumcitrat, 4 bis 12 Gew.-% Natriumcarbonat, (c) 0 bis 2 Gew.-% Natrium-Carboxymethylcellulose und 12 bis 25 Gew.-% Wasser besteht. Das Mittel eignet sich sowohl zum Enthärten von Waschlaugen als auch als Zusatz zu Waschmitteln.

EP 0 243 908 A2

## "Granulares, phosphatfreies Wasserenthärtungsmittel"

Gegenstand der vorliegenden Erfindung ist ein granulares, phosphatfreies Wasserenthärtungsmittel, das sich insbesondere als Zusatz zur Waschlauge in Hartwassergebieten eignet und die hierfür üblicherweise verwendeten Polymerphosphate zu ersetzen vermag.

Aus DE 33 16 513-A1 sind abriebfeste Granulate aus Zeolith und homo-bzw. copolymeren Carbonsäuren bekannt, die als Waschmittelzusatz bzw. als Enthärtungsmittel eingesetzt werden können. Als weitere Bestandteile enthalten sie organische Komplexbildner, wie Aminopolycarbonsäuren bzw. Aminopolyphosphonsäuren. Der Gehalt an Zeolith beträgt 30 bis 75 Gew.-% und der an homo-bzw. copolymerer Carbonsäure mindestens 5 Gew.-%, wobei in den Beispielen zwischen 8 und 11,5 Gew.-% zum Einsatz kommen. Der Feuchtigkeitsgehalt soll vorzugsweise nicht mehr als 4 Gew.-% betragen. Nachteilig an diesen Mitteln ist der relativ hohe Gehalt an (co)-polymeren Carbonsäuren, die ausschließlich C-C-Bindungen in der Polymerkette aufweisen und daher im Abwasser nicht oder nur über einen sehr langen Zeitraum biologisch abbaubar sind. Granulate mit einem Gehalt um 5 Gew.-% oder weniger besitzen jedoch nur mäßige Festigkeitseigenschaften. Außerdem sind ihre Gebrauchseigenschaften, insbesondere hinsichtlich der Verhütung von Kalkniederschlägen auf Textilien und Heizelementen in der Waschmaschine, nicht optimal und daher in kritischen Fällen unzureichend.

Aus DE 32 06 265-A1 sind ebenfalls Zeolith enthaltende Granulate bekannt, die neben 0,05 bis 2 % Polyacrylat noch 15 bis 20 Gew.-% Natriumcarbonat und 12 bis 22 Gew.-% Natriumhydrogencar bonat enthalten. Als Wasserenthärtungsmittel mit inkrustationsverhütender Wirkung sind sie ungeeignet, da sie die Bildung von Kalkniederschlägen begünstigen. Sie werden daher in erster Linie als Trägermaterial für flüssige Waschmittelbestandteile, insbesondere nichtionische Tenside eingesetzt. Dem gleichen Zweck dienen die in DE 25 49 766-A1 beschriebenen Granulate, die aus 5 bis 65 Gew.-% Zeolith, 0,1 bis 6 % Polycarboxylat, insbesondere einem Maleinsäure-Methylvinylether-Copoylmerisat und 5 bis 65 Gew.-% daran adsobiertem nichtionischen Tensid bestehen.

Gegenstand der Erfindung, mit der die Nachteile der bekannten Mittel vermieden werden, ist ein granulares phosphatfreies Wasserenthärtungsmittel mit einem Gehalt an (a) feinkristallinem Zeolith und (b) dem Natriumsalz einer Polyacryl-bzw. Polymethacrylsäure oder eines Copolymeren dieser Säuren mit Maleinsäure, dadurch gekennzeichnet, daß der Gehalt der Komponente (a) 50 bis 60 Gew.-%, der Komponente (b) 3 bis 5 Gew.-% beträgt und daß es ferner die folgenden Bestandteile enthält: (c) 4 bis 15 Gew.-% Natriumcitrat, (d) 4 bis 12 Gew.-% Natriumcarbonat, (e) 0 bis 2 Gew.-% Natrium-Carboxymethylcellulose und 12 bis 25 Gew.-% Wasser.

Der Bestandteil (a), der in Anteilen von 45 bis 65 Gew.-%, vorzugsweise 55 bis 60 Gew.-% anwesend ist, besteht aus synthetischem, gebundenes Wasser enthaltendem Natriumalumosilikat, vorzugsweise vom Zeolith A-Typ. Brauchbar ist ferner Zeolith NaX sowie dessen Gemische mit Zeolith NaA, wobei der Anteil des Zeoliths NaX in derartigen Gemischen zweckmäßigerweise unter 30 %, insbesondere unter 20 % liegt. Geeignete Zeolithe weisen keine Teilchen mit einer Größe über 30 Mikron auf und bestehen zu wenigstens 80 % aus Teilchen einer Größe von weniger als 10 Mikron. Ihr Calciumbindevermögen, das nach den Angaben der DE 24 12 837 bestimmt wird, liegt im Bereich von 100 bis 200 mg CaO/g.

Der Bestandteil (b) besteht aus einer homopolymeren und/oder copolymeren Carbonsäure in Form des Natriumsalzes. Geeignete Homopolymere sind Polyacrylsäure und Polymethacrylsäure. Geeignete Copolymere sind solche der Acrylsäure bzw. der Methacrylsäure mit Maleinsäure. Als besonders geeignet haben sich Copolymere der Acrylsäure bzw. Methacrylsäure mit Maleinsäure erwiesen, wie sie beispielsweise in EP 25 551-B1 beschrieben sind. Es handelt sich dabei um Copolymerisate, die 40 bis 90 Gew.-% Acrylsäure bzw. Methacrylsäure und 60 bis 10 Gew.-% Maleinsäure enthalten. Besonders bevorzugt sind solche Copolymere, in denen 45 bis 85 Gew.-% Acrylsäure und 55 bis 15 Gew.-% Maleinsäure anwesend sind. Das Molekulargewicht der Homo-bzw. Copolymeren beträgt im allgemeinen 1 000 bis 150 000, vorzugsweise 1 500 bis 100 000. Ihr Anteil an dem Adsorptionsmittel beträgt 3 bis 5,5 Gew.-% und vorzugsweise 3,5 bis 5 Gew.-%.

Bestandteil (c) ist Natriumcitrat, dessen Anteil 4 bis 15 Gew.-% beträgt, bezogen auf wasserfreies Salz. Vorzugsweise beträgt der Anteil 6 bis 12 Gew.-%, wobei außerdem der Anteil bevorzugt so gewählt wird, daß die Gesamtmenge der Bestandteile (b) und (c) 12 bis 16 Gew.-%, bezogen auf wasserfreie Salze, beträgt.

Bestandteil (d) ist Natriumcarbonat, dessen Anteil, berechnet auf wasserfreies Salz, 4 bis 12 Gew.-%, vorzugsweise 5 bis 10 Gew.-% beträgt. Das Natriumcarbonat kann, außer als wasserfreies Salz auch ganz oder teilweise als hydratisiertes Salz, beispielsweise als Monohydrat vorliegen.

Als fakultativen Bestandteil (e) können die Mittel Carboxymethylcellulose in From des Natriumsalzes enthalten. Dieser Bestandteil verbessert insbesondere die Granulierbarkeit und Kornstruktur des granularen Mittels. Sein Anteil kann bis 2 Gew.-% betragen und liegt bevorzugt im Bereich von 0,1 bis 1 Gew.-%.

Als weitere fakultative Bestandteile können die Mittel in geringer Menge Verbindungen enthalten, welche bei der Herstellung und Verarbeitung der synthetischen Zeolithe zugesetzt werden können, um die Stabilität der wäßrigen Zeolith-Dispersionen (master batch) zu erhöhen. Derartige Zusätze, die mit dem Zeolith in die Mittel eingebracht werden, sind in DE 25 27 388-B2 beschrieben. Es kann sich dabei um nichtionische, Polyglykolethergruppen aufweisende Tenside, beispielsweise primäre, mit 2 bis 7 Mol Ethylenoxid umgesetzte Alkohole mit 12 bis 18 C-Atomen handeln. Der über derartige Zeolith-Dispersionen in das Mittel eingebrachte Anteil an Stabilisatoren kann beispielsweise 0,5 bis 3 Gew.-% betragen. Notwendig für die gewünschten Eigenschaften des Wasserenthärtungsmittels ist dieser Bestandteil jedoch nicht.

Der Wassergehalt der Mittel hängt von den Trocknungsbedingungen ab. Der bei einer Trocknungstemperatur von 145 °C entfernbare Wassergehalt beträgt etwa 8 bis 18 Gew.-%, meist 10 bis 16 Gew.-%. Weitere vom Zeolith gebundene Anteile an Wasser, die bei höheren Temperaturen frei werden, sind in diesem Betrag nicht enthalten. Bezieht man diese durch Calcinieren des Zeoliths bei Temperaturen von 800 °C bestimmbaren Anteile ein, so beträgt der Wassergehalt der Mittel insgesamt 12 bis 25 Gew.-%.

Die mittlere Korngröße des Mittels beträgt 0,2 bis 1,2 mm, wobei der Anteil der Körner unterhalb 0,05 mm nicht mehr als 2 Gew.-% und oberhalb 2 mm nicht mehr als 5 Gew.-% beträgt. Vorzugsweise weisen mindestens 80 Gew.-%, insbesondere mindestens 90 Gew.-% der Körner eine Größe von 0,2 bis 1,6 mm auf, wobei der Anteil der Körner zwischen 0,1 und 0,05 mm nicht mehr als 5 Gew.-%, insbesondere nicht mehr als 3 Gew.-% und der Anteil der Körner zwischen 1,6 und 2 mm ebenfalls nicht mehr als 15 Gew.-%, insbesondere nicht mehr als 7 Gew.-% beträgt.

Das Schüttgewicht des Adsorptionsmittels beträgt 600 bis 900 g/l, vorzugsweise 650 bis 850 g/l. Obwohl das Granulat auf beliebige Weise, beispielsweise auch durch Sprühtrocknung hergestellt werden kann, ist die bevorzugte Herstellungsweise die Granulierung. Diese kann unter Verwendung üblicher Granuliervorrichtung, insbesondere mit Mischwerkzeugen und Sprühdüsen ausgerüsteten Granuliertrommeln durchgeführt werden.

Bei der Granulierung hat sich die Einhaltung einer bestimmten Reihenfolge der Stoffzugabe als besonders zweckmäßig und für die Produktqualität als vorteilhaft erwiesen. Nach diesem bevorzugten Verfahren wird der pulverförmige Zeolith vorgelegt, worauf das Natriumcitrat sowie die in wasserfreier Form eingesetzte Soda trocken zugemischt werden. Nach beendeter Homogenisierung, die in üblichen Mischtrommeln oder Mischern mit rotierenden Werkzeugen etwa 2 bis 4 Minuten in Anspruch nimmt, wird eine wäßrige Lösung des (co-)polymeren Salzes auf das ständig in Bewegung gehaltene Mischgut aufgesprüht und die Granulierung vorgenommen. Die Konzentration der Polymerlösung kann, je nach Viskosität, zwischen 15 und 40 Gew.-% betragen. Mit Vorteil verwendet man eine auf Temperaturen von 35 bis 60 °C erwärmte Polymerlösung. Sofern man zusätzlich Carboxymethylcellulose bei der Granulierung einsetzt, wird sie ebenfalls in wäßriger, 2 bis 5 Gew.-%iger Lösung eingesetzt. Die CMC-Lösung kann gleichzeitig oder zeitlich versetzt, d. h. nach Zufügen eines Teiles oder der Gesamtmenge der Polymerlösung, eingesprüht werden.

Die Granulierung wird so geführt, daß der gesamte Wassergehalt der sich bildenden Agglomerate während des Sprühens und Mischens 40 bis 45 Gew.-%, insbesondere 35 Gew.-% nicht übersteigt. Als vorteilhaft für die Bildung einheitlicher, noch gut schüttfähiger Agglomerate von 25 bis 35 Gew.-%, insbesondere von 27 bis 33 Gew.-% erwiesen.

Die Granulierung kann chargenweise oder kontinuierlich durchgeführt werden, wobei die Verweilzeit im Granulator im allgemeinen 3 bis 10 Minuten beträgt. Das noch feuchte Agglomerat wird anschließend in eine Trocknungsvorrichtung überführt und dort auf den in der Erfindungsdefinition angegebenen Wassergehalt von 12 bis 25 Gew.-% getrocknet.

## Beispiele

### Beispiel 1

In einer Granuliertrommel, die mit rotierenden Mischorganen ausgerüstet war, wurden 100 Gewichtsteile pulverförmiger synthetischer, wasserhaltiger Zeolith NaA (entspricht 78,5 Gewichtsteile wasserfreie Substanz) mit 13,2 Gewichtsteilen Natriumcitrat und 6,4 Gewichtsteilen wasserfreier Soda während 3 Minuten vermischt. Anschließend wurden über einen Zeitraum von 2,5 Minuten 6,3 Gewichtsteile eines Copolymeren

3

aus Acrylsäure und Maleinsäure (Molverhältnis 7 : 3, Molekulargewicht 70 000), vorliegend als Natriumsalz, als 20 gew.-%ige wäßrige Lösung (Temperatur 40 °C) über Düsen eingesprüht. Gleichzeitig wurden 0,4 Gewichtsteile Na-Carboxymethylcellulose, vorliegend als 2,5%ige wäßrige Lösung (40 °C) auf das Mischgut aufgesprüht. Nach beendeter Zugabe der Flüssigkeit wurde noch 4 Minuten nachgemischt und das feuchte, einen Wassergehalt von insgesamt 31 Gew.-% aufweisende Agglomerat über eine Schüttelrinne in einen Wirbelschichttrockner überführt und auf einen Gesamtwassergehalt von 17,5 Gew.-% bzw. auf einen bei 145 °C entfernbaren Wassergehalt von 11 Gew.-% getrocknet. Anschließend wurden Granulate mit einer Korngröße oberhalb 1,6 mm abgesiebt, gemahlen und in den Granulierprozeß zurückgeführt. Die Korngröße lag zwischen 0,2 und 1,6 mm, das Schüttgewicht betrug 830 g/l. Das Produkt war lagerstabil und gut rieselfähig und wies die folgende Zusammensetzung auf:

62,5 Gew.-% Zeolith NaA
10,5 Gew.-% Natriumcitrat
5,1 Gew.-% Natriumcarbonat
4,2 Gew.-% Copolymer (Na-Salz)
0,3 Gew.-% Carboxymethylcellulose (Na)
17,5 Gew.-% Wasser

### Anwendungstechnische Versuche

Textilproben aus standardisiertem Baumwollgewebe (WFK-Gewebe der Wäscherei-Forschungsanstalt, Krefeld, Bundesrepublik Deutschland) wurden im Launderometer bei 90 °C unter Verwendung phosphatreduzierter bzw. phosphatfreier Waschmittel des Handels mit und ohne Zusatz des Mittels gemäß Beispiel 1 gewaschen. Die Wasserhärte betrug 21 °dH bzw. 28 °dH (entsprechend 210 bzw. 280 mg CaO/l), das Verhältnis von Textilgewicht zu Flüssigkeitsmenge 1 : 10. Nach jeweils 25 Wäschen wurde die Zunahme des Aschegehaltes gravimetrisch bestimmt. Die Ergebnisse sind in der folgenden Tabelle zusammengestellt. Die Abkürzung M1 steht für Mittel nach Beispiel 1.

| Bei-spiel | Waschmittel | Aschegehalt bei 21 °dH | 28 °dH |
|---|---|---|---|
| 2a | 4,3 g/l phosphatreduziertes Universalwaschmittel I | 2,27 | – |
| 2b | zusätzlich 1,5 g/l M1 | 0,27 | – |
| 3a | 4,3 g/l phosphatreduziertes Universalwaschmittel II | 4,43 | – |
| 3b | zusätzlich 1,5 g/l M1 | 1,12 | – |
| 4a | 4,3 g/l phosphatfreies Universalwaschmittel III | – | 2,45 |
| 4b | zusätzlich 1,5 g/l M1 | – | 0,88 |

I    = OMO (Schweiz)

II   = Ariel (Schweiz)

III  = Dixan (Schweiz)

4

**Ansprüche**

1. Granulares phosphatfreies Wasserenthärtungsmittel mit einem Gehalt an (a) feinkristallinem Zeolith und (b) dem Natriumsalz einer Polyacryl-bzw. Polymethacrylsäure oder eines Copolymeren dieser Säuren mit Maleinsäure, dadurch gekennzeichnet, daß der Gehalt der Komponente (a) 50 bis 60 Gew.-%, der Komponente (b) 3 bis 5 Gew.-% beträgt und daß es ferner die folgenden Bestandteile enthält: (c) 4 bis 15 Gew.-% Natriumcitrat, (d) 4 bis 12 Gew.-% Natriumcarbonat, (e) 0 bis 2 Gew.-% Natrium-Carboxymethylcellulose und 12 bis 25 Gew.-% Wasser.

2. Mittel nach Anspruch 1, gekennzeichnet durch einen Gehalt an

55\\ bis 60 Gew.-% der Komponente (a)

3,5 bis 5 Gew.-% der Komponente (b)

6\\bis 12 Gew.-% der Komponente (c)

5\\bis 10 Gew.-% der Komponente (d).

3. Mittel nach den Ansprüchen 1 und 2, dadurch gekennzeichnet, daß die Komponente (a) aus einem synthetischen Zeolith vom Typ NaA besteht.

4. Mittel nach den Ansprüchen 1 und 2, dadurch gekennzeichnet, daß die Komponente (b) aus dem Natriumsalz eines Copolymeren aus 45 bis 85 Gew.-% Acrylsäure und 55 bis 15 Gew.-% Maleinsäure mit einem Molekulargewicht von 1 500 bis 100 000 besteht.

5. Mittel nach den Ansprüchen 1 bis 4, gekennzeichnet durch einen Gehalt an (e) 0,1 bis 1 Gew.-% Natriumcarboxymethylcellulose.

6. Mittel nach den Ansprüchen 1 bis 5, dadurch gekennzeichnet, daß es eine mittlere Korngröße von 0,2 bis 1,2 mm aufweist, wobei der Gehalt an Körnern mit einer Größe von 0,2 bis 1,6 mm mindestens 80 Gew.-%, vorzugsweise mindestens 90 Gew.-%, von 0,1 bis 0,05 mm nicht mehr als 5 Gew.-%, vorzugsweise nicht mehr als 3 Gew.-% und der von 1,6 und 2 mm nicht mehr als 15 Gew.-%, vorzugsweise nicht mehr als 7 Gew.-% beträgt.

7. Verfahren zur Herstellung eines Mittels nach den Ansprüchen 1 bis 6, dadurch gekennzeichnet, daß man in einer Granuliervorrichtung die Bestandteile (a), (c) und (d) trocken vormischt und anschließend mit einer wäßrigen Lösung der Komponente (b) besprüht und granuliert, wobei der Wassergehalt des Agglomerates auf 25 bis 35 Gew.-% eingestellt wird, worauf man sie auf einen Wassergehalt von 12 bis 25 Gew.-% trocknet.

8. Verfahren zur Herstellung eines Mittels nach Anspruch 7, dadurch gekennzeichnet, daß man gleichzeitig mit der Zugabe der wäßrigen Polymerlösung oder im Anschluß daran eine wäßrige Lösung der Komponente (e) zufügt.